(19) Europäisches Patentamt
European Patent Office
Office européen des brevets

(11) **EP 4 772 487 A1**

(12) **EUROPEAN PATENT APPLICATION**

(43) Date of publication:
**08.07.2026 Bulletin 2026/28**

(21) Application number: **25227882.5**

(22) Date of filing: **31.12.2025**

(51) International Patent Classification (IPC):
***C04B 28/02*** (2006.01)     ***B32B 13/04*** (2006.01)

(52) Cooperative Patent Classification (CPC):
(C-Sets available)
**C04B 28/02; B32B 13/04;** C04B 2111/00112;
C04B 2111/00482; C04B 2111/00517;
C04B 2111/00612                              (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 PT 2024119958**

(71) Applicant: **Oprimee - Innovation Design
Engineering
Solutions, Lda
3405-155 Oliveira do Hospital (PT)**

(72) Inventor: **DOS SANTOS ALMEIDA NUNES, João
Miguel
3405-155 OLIVEIRA DO HOSPITAL (PT)**

(74) Representative: **Patentree
Edificio Net
Rua de Salazares, 842
4149-002 Porto (PT)**

(54) **CONSTRUCTION MATERIALS DERIVED FROM TEXTILE INDUSTRY EFFLUENTS/ WASTEWATER, METHODS OF MANUFACTURE AND USES THEREOF**

(57)     The present disclosure relates to a construction material, such us blocks with different geometric configurations, forms and dimensions, pavers, pillars, beams, among others, derived from the treatment and valorisation of textile industry effluents and wastewater, and other residues from industrial processes,, namely ashes and slag from construction and demolitions, , as well as to a method for treating industrial effluents by functional incorporation into a solid matrix, methods of manufacturing said construction material, and uses thereof. The said construction material and the associated effluent treatment method enable the valorisation of water and industrial effluents, reduce the consumption of natural resources, convert liquid industrial waste into a chemically stabilised and immobilised form, reduces the consumption of natural recourses, and minimizes the ecological footprint of the construction sector.

(52) Cooperative Patent Classification (CPC): (Cont.)

C-Sets
**C04B 28/02, C04B 14/06, C04B 14/48,
C04B 16/06, C04B 18/0418, C04B 18/08,
C04B 18/141, C04B 18/16, C04B 22/064,
C04B 40/0028;
C04B 28/02, C04B 14/06, C04B 14/48,
C04B 16/06, C04B 18/08, C04B 18/141,
C04B 18/16, C04B 22/0046, C04B 22/064,
C04B 40/0028**

## Description

## TECHNICAL FIELD

The present disclosure relates to a construction material, such us blocks with different geometric configurations, forms and dimensions, pavers, pillars, beams, among others, made of textile industry effluents and wastewater and other residues from industrial processes, namely ashes and slag from construction and demolitions, methods of manufacturing said construction material, and uses thereof. Particularly, the present disclosure contributes to the sustainability of the construction industry by reusing resources while simultaneously reducing the environmental impact of the textile industry.

## BACKGROUND

The textile industry stands out as a pivotal and swiftly expanding industrial sector in contemporary times. In October 2022, Portugal witnessed a remarkable surge in business volume, registering a substantial 23.13% increase compared to the preceding year. Nevertheless, as other industrial sectors, the textile industry produces a considerable volume of effluents (liquid waste stemming from its manufacturing processes). These effluents are commonly identified by the presence of dyes, finishing chemicals, residues, fibers, and other materials arising from diverse stages of the production process.

The predominant issue associated with these residues stems from the presence of pollutants generated during dyeing, finishing, washing, and printing processes. This is attributed to their vivid coloration (arising from the presence of dyes that were not completely absorbed in the dyeing process), elevated organic content (resulting from compounds used in finishing and dyeing procedures), and, in some cases, the existence of toxic chemical compounds. Most of the current options involve discharging the effluent and wastewater either into (1) rivers, sea or oceans, or (2) into municipal wastewater treatment plants, typically in a pure or diluted state, because the existing technologies are either not economic viable for industrial-scale production, or lack efficiency, or are unable to effectively address the problems posed by effluents or wastewater containing toxic chemicals elements. The construction industry faces continuous challenges related to reducing their environmental impact, minimizing the consumption of natural resources (for example, water), and enhancing the durability and maintenance, especially when exposed to harsh environmental factors such as humidity, wear, and even graffiti. Although traditional construction materials offer structural strength, they often require additional treatments to increase their longevity and maintain their appearance. In the last years, the construction industry is moving towards prefabricating construction materials. The construction industry is moving towards methods of pre-manufacturing construction materials for different applications, such us, the construction of buildings, pavements and large-scale structures by fitting and connecting smaller components. However, the problem of excessive water consumption remains unsolved. Construction elements, such us, blocks with different geometric configurations, forms, and dimensions, pavers, pillars, beams, and others are produced using: a concrete bonding agents, usually cement, which may or may not incorporate lime or other additives; an aggregate, such as sand, with different dimensions, and which is combined with other materials such as stone powder to fill voids and/or construction and demolition waste, preventing excessive permeability; and water, which plays a crucial role as a catalyst for chemical reactions in this process.

In addition to the significant cost associated with effluent treatment in the textile industry, another challenge arises concerning the lack of applicability of the considerable amount of water resulting from manufacturing processes. Faced with this scenario, it is imperative to find a solution that benefits not only the textile industry but also the construction sector, since it is undergoing a period of significant growth and requires substantial volumes of water.

Biomass ashes and other types of ashes and slag represent an emerging ecological trend in the construction sector, since that, when combined with cement or other binding agents, these residues exhibit interesting and proved characteristics as concrete additives and substitutes for cement. However, biomass ashes and other ashes and slag resulting from the direct combustion, gasification, incineration, thermochemical process degradation and anaerobic or aerobic processes may be contaminated with heavy metals or other contaminants. Consequently, these residues can pose environmental risks if not properly managed. Traditional methods for producing construction materials do not effectively prevent the presence of contaminants and are also not an environmentally safe solution.

Construction materials have the particularity of fixing their constituents for decades, ensuring the safe application of various inorganic materials. However, the presence of contaminants, such as heavy metals, in these materials can pose environmental and health risks. Therefore, it is imperative to develop construction materials that not only provide structural integrity but also effectively immobilize harmful substances, thereby mitigating environmental impact and safeguarding public health. It is also crucial to develop innovative methods for producing eco-friendly construction materials for advancing sustainable construction practices.

These facts are disclosed in order to illustrate the technical problem addressed by the present disclosure.

## GENERAL DESCRIPTION

The present disclosure relates to a construction material made of textile industry effluents and wastewater and other residues, namely ashes and slag from, methods of manufacturing said construction material, and uses thereof.

The present disclosure allows for the creation of more efficient construction materials with a low environmental impact, suitable for various types of construction, especially in areas exposed to severe weather conditions.

The present disclosure eliminates the need for pre-treating industrial effluents, which include but are not limited to textile effluents and/or wastewater, and enhances the value of the constituents present, which also improve the characteristics of the construction material to apply in different applications, including the construction of urban sidewalks and buildings in high humidity environments.

The present disclosure offers significant environmental benefits, contributing to the reuse of textile effluents, the conservation of water resources and the reduction of waste.

The present disclosure supports waste valorisation and reduces dependency on freshwater resources, aligned with the priorities and policies of the waste hierarchy. Waste hierarchy is to extract the maximum practical benefits from products and to generate the minimum amount of waste.

The present disclosure also describes the method of manufacturing the construction material from the reuse of effluents and wastewater treatment from the textile industry.

The method of manufacturing the construction material of the present disclosure involves combining textile effluents and/or wastewater with binders, such as cement, and aggregates (namely, construction and demolition waste), such as sand or stone dust, to form a homogeneous mixture, creating the construction material. These elements are cured under controlled conditions, ensuring durability and improved mechanical properties.

In an embodiment, the method of manufacturing the construction material from the reuse of effluents and wastewater treatment from textile industry may comprise at least one system able to mitigate environmental impacts and improve binding characteristics.

In an embodiment, the construction material of the present disclosure may comprise two layers, offering a solution for the presence of heavy metal contaminants. In the two -step production process, the inner layer, designated as CE, is produced with the textile industry effluents and/or wastewater, ashes and slag possibly containing heavy metals or others contaminants, that compromise the safety and usability of the final construction material if used externally. For this reason, the external layer, designated as CI, is produced with non-contaminated textile industry effluents and/or wastewater, along with ashes and slag, ensuring that the external surface remains free from harmful substances.

In an embodiment, the construction material of the present disclosure may comprise a protective layer or layers that can be applied to improve resistance to environmental factors or enhance safety in sensitive applications.

In an embodiment, the construction material of the present disclosure may comprise at least one residue, such as ash and/or slag, valorising the properties of this inorganic materials.

An aspect of the present disclosure relates to a construction material, comprising at least one layer, wherein said at least one layer comprises a textile effluent and/or wastewater (1); at least one binder (2); and/or at least one aggregate (3); and optionally, the at least one binder (2) is combined with a residue.

In an embodiment, the textile industry effluent and wastewater are characterised prior to use by measuring physicochemical parameters including pH, electrical conductivity, total dissolved solids, chemical oxygen demand (COD, also referred to as CQO), and biological oxygen demand ($BOD_5$, also referred to as CBO). The effluent typically exhibits a pH ranging from 5.5 to 9.5, an electrical conductivity ranging from 0.5 to 20 mS/cm, and total dissolved solids ranging from 500 to 20,000 mg/L. The chemical oxygen demand (COD/CQO) may range from 200 to 5,000 mg $O_2$/L, while the biological oxygen demand ($BOD_5$/CBO) may range from 50 to 2,500 mg $O_2$/L. Suspended solids may range from 50 to 2,000 mg/L, and the effluent may further contain dissolved salts, dyes, surfactants, and organic finishing agents. Such characterisation allows assessment of the variability of textile wastewater and its suitability for incorporation as a liquid fraction in the construction material.

In an embodiment, the construction material comprises at least a first layer and a second layer.

In an embodiment, the first layer of the construction material is an inner layer (CE).

In an embodiment, the second layer of the construction material is an external layer (CI).

In an embodiment, the inner layer (CE) of the construction material comprises the textile effluent and/or wastewater (1), the binder (2) combined with a contaminated residue, and the aggregate (3).

In an embodiment, the external layer (CI) of the construction material comprises the textile effluent and/or wastewater (1), the binder (2) combined with a non-contaminated residue, and the aggregate (3).

In an embodiment, the construction material is selected from a list consisting of a paver, a pillar, a beam, among others, and combinations thereof.

In an embodiment, the at least one binder of the construction material comprises cement.

In an embodiment, the at least one aggregate of the construction material is selected from a list consisting of sand, stone powder, namely, stone dust, or construction and demolition waste, among others, and combinations thereof.

In an embodiment, the residue of the construction material is selected from a list consisting of ash, slag, among others, and combinations thereof.

In an embodiment, the construction material of the present disclosure further comprises an additive and/or a pigment.

In an embodiment, the additive of the construction material is lime.

In an embodiment, the construction material of the present disclosure further comprises a coating layer.

In an embodiment, the coating layer of the construction material is selected from a list consisting of: acrylic coating, polyurethane coating, epoxy coating, silicone coating, water-based paint coating, polymer-based coating, bio-based coating, ceramic coating, natural resin coating, or lime-based coating, among others, and combinations thereof.

In an embodiment, the coating layer of the construction material comprises a heavy metal-free coating layer.

In an embodiment, the construction material of the present disclosure further comprises a protective layer.

Another aspect of the present disclosure relates to the use of the construction material of the present disclosure as a construct pavement.

Even another aspect of the present disclosure relates to the use of the construction material of the present disclosure as a wall.

Another aspect of the present disclosure relates to a method for manufacturing the construction material described in the present disclosure, comprising the following steps: providing the textile industry effluent and wastewater; optionally, characterizing the textile industry effluent and wastewater; mixing the textile industry effluent with the binder and the aggregate, optionally in one step, moulding the mixture into a construction material using a mould; curing the construction material; obtaining the construction material with one layer.

A further aspect of the present disclosure relates to a method for manufacturing the construction material described in the present disclosure, comprising the following steps: providing the textile industry effluent and wastewater; optionally, characterizing the textile industry effluent and wastewater; mixing the textile industry effluent with the binder and the aggregate, optionally in two steps; producing the external layer and the inner layer (CE) using an internal steel formwork, wherein one face of the external layer remains unfinished; bonding the unfinished face of the external layer with the inner layer (CE); completing the unfinished face of the external layer; moulding the mixture into a construction material using a mould; curing the construction material; and obtaining the construction material with at least two layers; optionally, producing the inner layer (CE) first and subsequently the external layer.

In an embodiment, the construction material is manufactured by mixing a textile industry effluent with at least one binder and at least one aggregate, moulding the resulting mixture, and curing the moulded material for a period of from 3 to 28 days to obtain a monolithic, single-layer construction material.

In another embodiment, the construction material is manufactured as a multilayer structure by separately forming an inner main layer and an external protective layer using a formwork, bonding the layers prior to curing, and curing the bonded structure for a period of from 3 to 28 days to obtain a construction material comprising at least two structurally bonded layers.

Construction material refers to a cementitious material intended for structural or semi-structural applications, including pavers, beams, and pillars.

Total liquid fraction refers to the combined aqueous phase added during mixing, comprising water and/or textile industry effluent.

Textile industry effluent refers to wastewater generated from textile processing operations, optionally containing dissolved salts, dyes, or organic matter, and having a pH between 5.5 and 9.5.

Binder refers to a hydraulic or latent hydraulic material capable of hardening by hydration, including cement.

Solid residue refers to a particulate solid material incorporated with the binder, including ashes, slags, or pozzolanic materials.

Encapsulation / immobilisation refers to the physical and chemical containment of solid residues within the hardened cementitious matrix, limiting leaching.

Aggregate refers to granular mineral material providing bulk and mechanical stability.

Hydraulic permeability is measured according to Darcy's law using a constant-head or falling-head permeameter on cured specimens, expressed in m/s.

Effective diffusivity is determined using a steady-state diffusion test with a tracer species, based on Fick's law, expressed in $m^2/s$.

Compressive strength is measured according to EN 12390-3 or ASTM C39 on cubic or cylindrical specimens after curing.

Apparent density is determined by dividing dry mass by external volume of the cured specimen.

Particle size of aggregates is determined by sieve analysis according to EN 933-1.

Apparent density of the construction material is determined by measuring the dry mass of a cured specimen and dividing it by the external geometric volume of the specimen. Prior to measurement, the specimen is dried to constant mass at a temperature of 40 to 60 °C until the mass variation is less than 0.1% over a 24-hour period. The dry mass is measured using a calibrated balance. The external volume is determined from dimensional measurements of the specimen using callipers, taking into account the specimen geometry (for example, cubic, cylindrical, or prismatic). Alternatively, the external volume may be determined by liquid displacement using a non-reactive, non-penetrating liquid. The apparent density is calculated as the ratio of the dry mass to the external volume and is expressed in kilograms per cubic metre ($kg/m^3$).

In one embodiment, the invention relates to a method for producing a construction material as described in the present disclosure, wherein a textile industrial effluent is used as a functional liquid component of a cementitious formulation. The textile effluent comprises water together with dissolved and/or suspended constituents and typically exhibits a pH in the range of 5.5 to 9.5.

Prior to use, the textile effluent may optionally be characterised by measuring one or more physicochemical parameters, including pH, chemical oxygen demand (COD), biological oxygen demand ($BOD_5$), total solids, suspended solids, electrical conductivity and/or the concentration of metallic contaminants. Based on this characterisation, the effluent may be classified as functionally compatible with the cementitious formulation. Where necessary, the effluent may be subjected to conditioning steps such as pH adjustment, partial solids removal, dilution, oxidation or equalisation, solely to ensure compatibility with the hydration and hardening behaviour of the hydraulic binder.

The method further comprises providing a cementitious composition including at least one hydraulic binder, at least one mineral aggregate and, optionally, a solid residue. The textile effluent is incorporated into this composition as a partial or total substitute for mixing water, preferably such that the mass ratio between textile effluent and the total liquid fraction does not exceed 0.20. In this manner, the effluent contributes to the formation of the cementitious matrix rather than remaining as a liquid waste.

From the resulting mixture, at least one cementitious layer is formed. In preferred embodiments, a multilayer construction material is produced, comprising an inner layer and an external protective layer. The formed material is then cured to obtain a solid construction material.

During hydration and curing of the binder, constituents originating from the textile effluent are stabilised and immobilised within the hardened cementitious matrix. Immobilisation occurs through combined chemical and physical mechanisms, including precipitation of contaminants as poorly soluble hydroxides under alkaline conditions, as well as incorporation into hydrated mineral phases such as calcium silicate hydrates and hydrated aluminates. Physical encapsulation within the dense microstructure of the cured matrix further limits contaminant mobility.

In embodiments comprising a multilayer structure, migration of effluent-derived constituents is additionally restricted by the external protective layer, which exhibits lower permeability and diffusivity than the inner layer. As a result, the concentration of contaminants measured in the external layer does not exceed 10%, preferably not more than 5%, of the concentration measured in the inner layer.

The method is carried out independently of municipal wastewater treatment plants or industrial effluent treatment plants. Environmental safety is assessed based on the performance of the final cured construction material, rather than on the upstream treatment history of the effluent. Classification of the effluent is thus independent of the industrial process from which it originates and relies solely on measurable parameters at the point of incorporation.

Leaching tests performed on the cured construction material demonstrate that the release of metallic contaminants, including lead, chromium, zinc and nickel, remains below applicable regulatory limits under standard leaching conditions. In this way, the textile effluent is effectively converted from an environmental liability into a functional component of a solid construction material through chemical stabilisation and physical confinement, while maintaining the mechanical, durability and environmental performance required for construction applications.

## BRIEF DESCRIPTION OF THE DRAWINGS

The following figures provide preferred embodiments for illustrating the disclosure and should not be seen as limiting the scope of invention.

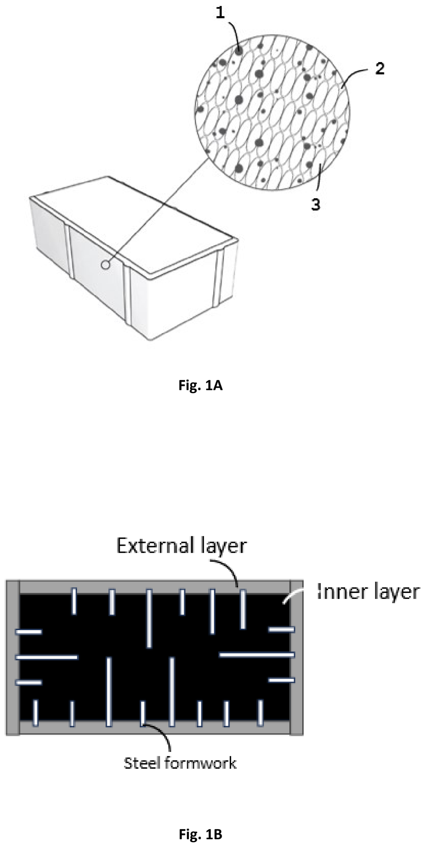

**Figure 1A - 1B:** Schematic representation of an embodiment of a construction material with one or two layers from the reuse of effluents and wastewater treatment from textile industry (1), together with at least one binder, cement, that will be possible to combined with ashes and/or slag (2) and/or at least one aggregate (3).

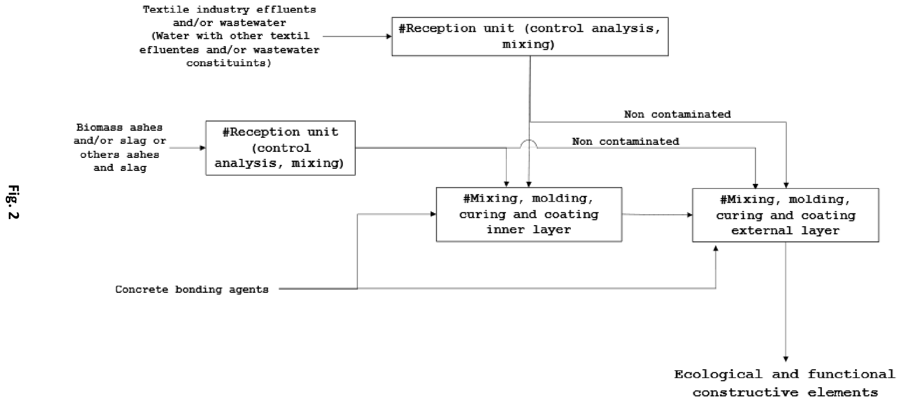

**Figure 2:** Illustration of a flowchart of the method of manufacturing the construction material of the present disclosure.

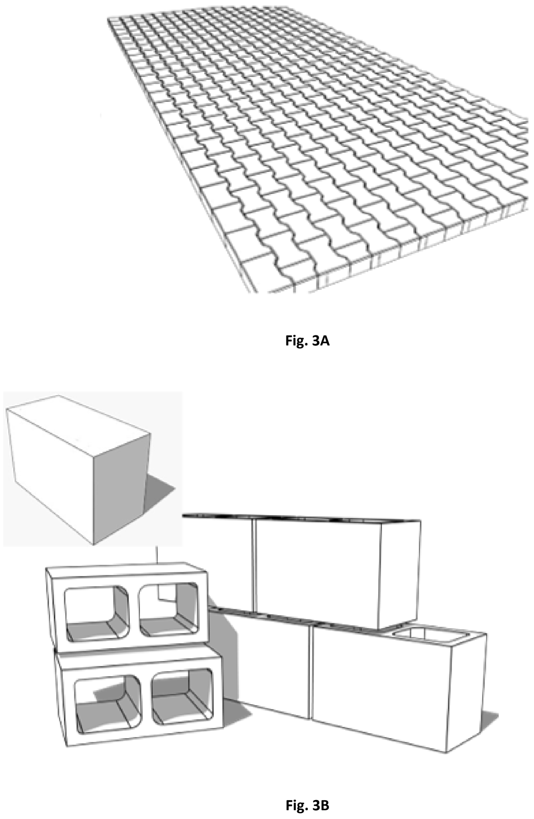

**Figure 3A - 3B:** Illustration of two embodiments of the construction material, namely street pavements (i) through the production of pavers, and walls (ii) through the production of blocks with different configurations, forms and dimensions, suitable for constructing structural walls in buildings.

## DETAILED DESCRIPTION

The present disclosure relates to a construction material, such us blocks with different geometric configurations, forms and dimensions, pavers, pillars, beams, among others, made of textile industry effluents and wastewater and other residues from industrial processes, namely ashes and slag from construction and demolitions, methods of manufacturing said construction material, and uses thereof. The said construction material enables the valorisation of water, reduces the consumption of natural recourses, and minimizes the ecological footprint of the construction sector.

The present disclosure introduces a novel approach for the reuse of textile industry effluents in the production of precast construction materials, such us, blocks (with different geometric configurations, forms and dimensions), pavers, pillars, beams, among others.

The textile industry, a rapidly growing sector, generates a significant volume of effluents containing dyes, chemicals, and residues. Despite ongoing sustainability efforts, these pollutants persist, requiring effective water treatment systems. Traditional treatment methods-physical, chemical, and biological-are employed to manage effluent composition in accordance with environmental regulations.

The present disclosure redirects textile effluents, particularly those in Europe, that are free from heavy metals, into the manufacturing of construction materials. The effluent is combined with water, pigments, binders, and aggregates to create blocks with different geometric configurations, forms and dimensions, as well as, pavers, pillars, beams, among others, contributing to the sustainability and the profitability of the construction sector.

The present disclosure contributes to circular economy, while also supporting the development of more resilient and environmentally-friendly construction materials and textile production. It offers a symbiotic solution that benefits the environment, economy, and society addressing the significant environmental impacts and resource consumption associated with both sectors.

Effluents and wastewater from the textile industry are collected from activities such as dyeing and finishing fabrics. These effluents and wastewater have blonding resins and others constituents, which are used to give resistance to construction materials and to allow the reuse of water.

The present invention relates, in a general and non-limiting manner, to the clarification, definition, categorisation, and technical qualification of what is understood by the expression "textile effluent" or, more broadly, "industrial effluent," for the purposes of determining its suitability for functional conditioning, environmental stabilisation, and safe incorporation into solid matrices. In particular, the invention establishes objective criteria concerning the parameters that such effluents must comply with, including maximum contaminant limits, pH values, chemical oxygen demand (COD), biochemical oxygen demand (BOD$_5$), total solids, concentrations of metals including lead (Pb), chromium (Cr), zinc (Zn) and nickel (Ni), the possible requirement for pre-treatment, and the methodology by which an effluent is determined to be "safe" or "contaminated."

The term "industrial effluent" whenever used in this document is intended to be understood as any liquid stream originating from continuous or discontinuous industrial processes, comprising water, dissolved solids and/or suspended solids, organic compounds and/or inorganic compounds, which is capable of undergoing functional conditioning and being safely incorporated into solid matrices. This definition applies independently of the industrial sector of origin and independently of the upstream treatment technology applied to said effluent. In this context, and as a strategic technical consideration, the definition of industrial effluent is based on the result achieved, namely compatibility and safety of incorporation, rather than on the specific treatment technology employed, such as municipal wastewater treatment plants (ETAR) or industrial effluent treatment plants (ETP). Accordingly, the classification does not depend on whether the effluent has passed through a particular type of treatment facility but rather on its measurable characteristics at the final effluent stage.

In order to ensure clarity, reproducibility, and safety, industrial effluents are classified exclusively on the basis of parameters measured in the final effluent. According to this functional classification, three distinct classes of industrial effluent are defined.

A first class, referred to as Class A - High-quality industrial effluent, corresponds to industrial effluents that are compatible with direct and demanding applications following functional control.

A second class, referred to as Class B - Functionally compatible industrial effluent, corresponds to industrial effluents that are compatible with safe incorporation into solid materials after simple conditioning.

A third class, referred to as Class C - Non-compatible industrial effluent, corresponds to industrial effluents that exceed functional limits and are therefore excluded from use, unless subjected to additional conditioning.

This classification system is strictly parameter-based and does not rely on subjective assessment or origin-based categorisation.

In an embodiment of the present disclosure, broad physico-chemical parameters are defined as reference ranges for Class A and Class B industrial effluents. These parameters include general physico-chemical indicators and specific contaminant thresholds. With regard to general parameters, Class A industrial effluents exhibit a pH in the range from 6.0 to 9.0, whereas Class B industrial effluents exhibit a pH in the range from 5.5 to 9.5. The chemical oxygen demand (COD), expressed as mg $O_2$ per litre, is equal to or less than 300 mg $O_2$/L for Class A and equal to or less than 3,000 mg $O_2$/L for Class B. The biochemical oxygen demand over five days (BOD$_5$), expressed as mg $O_2$ per litre, is equal to or less than 100 mg $O_2$/L for Class A and equal to or less than 1,500 mg $O_2$/L for Class B. Total solids content, expressed in mg/L, is equal to or less than 1,000 mg/L for Class A and equal to or less than 5,000 mg/L for Class B. Suspended solids (TSS or SST), expressed in mg/L, are equal to or less than 300 mg/L for Class A and equal to or less than 2,000 mg/L for Class B. Electrical conductivity, expressed in microsiemens per centimetre

($\mu$S/cm), is equal to or less than 3,000 $\mu$S/cm for Class A and equal to or less than 10,000 $\mu$S/cm for Class B.

In addition to general parameters, functional safety limits are defined for metallic contaminants. For lead (Pb), the concentration is equal to or less than 0.5 mg/L for Class A and equal to or less than 2.0 mg/L for Class B. For total chromium (Cr total), the concentration is equal to or less than 1.0 mg/L for Class A and equal to or less than 5.0 mg/L for Class B. For hexavalent chromium (Cr(VI)), the concentration is equal to or less than 0.05 mg/L for Class A and equal to or less than 0.1 mg/L for Class B. For zinc (Zn), the concentration is equal to or less than 2.0 mg/L for Class A and equal to or less than 10.0 mg/L for Class B. For nickel (Ni), the concentration is equal to or less than 1.0 mg/L for Class A and equal to or less than 5.0 mg/L for Class B. Optionally, copper (Cu) may be considered, with concentrations equal to or less than 2.0 mg/L for Class A and equal to or less than 10.0 mg/L for Class B. It is expressly stated that these values constitute functional ranges, and that the final acceptability of a given industrial effluent is validated based on performance criteria, namely leaching behaviour and durability of the resulting solid material.

In another embodiment of the present disclosure, the determination of whether an industrial effluent is considered "safe" or "contaminated" is based on objective, measurable criteria. An industrial effluent is classified as a safe industrial effluent when it complies with the requirements of Class A or Class B and, after incorporation into a solid matrix and curing, demonstrates leaching levels below applicable limits and an immobilisation efficiency of at least 95%, preferably at least 99%.

Conversely, an industrial effluent is classified as a contaminated industrial effluent when it exceeds any functional limit defined for Class A or Class B and is therefore excluded from use, unless subjected to reconditioning.

In an embodiment of the present invention, industrial effluents are used as functional components of solid materials, by total or partial substitution of water, combined with functional conditioning, chemical encapsulation, and physical confinement within a solid matrix, thereby producing a final product that is useful, durable, and environmentally safe.

The present disclosure relates to an independent of conventional wastewater treatment plants, including municipal wastewater treatment plants (ETAR) or dedicated industrial effluent treatment plants (ETP). The present disclosure is based on the achieved technical result, namely functional compatibility with the solid matrix, leaching behaviour of the final material, and long-term durability, rather than on the upstream treatment technology applied to the effluent.

In this context, encapsulation is supported by objective technical evidence, including leaching data, durability tests or exposure-to-water tests, and experimental proof demonstrating that the resulting material effectively immobilises heavy metals. Furthermore, proportions of components and underlying chemical mechanisms contributing to immobilisation are specified, as described in detail below.

In an embodiment of the present disclosure, the industrial effluent is not, by principle, subjected to mandatory conventional pre-treatment, such as complete treatment in a municipal or industrial wastewater treatment facility. Instead, the necessity for pre-treatment is determined functionally, based on the compatibility of the effluent with the solid matrix and on the environmental performance of the final material, rather than on the industrial sector of origin or on the treatment technologies available upstream.

In an embodiment, no additional pre-treatment is required when the industrial effluent, as generated or after minimal conditioning operations, exhibits a pH compatible with hydraulic binders, an absence of compounds that inhibit hydration or curing reactions, contaminant concentrations that fall within functional Classes A or B, and chemical stability throughout the manufacturing process. In this embodiment, the industrial effluent may be used directly as a total or partial substitute for water, with stabilisation being ensured by the incorporation process itself and by the encapsulation mechanisms occurring within the solid matrix.

In another embodiment, when the industrial effluent exhibits parameters outside the defined functional ranges, the effluent may be subjected to limited functional pre-treatment. In this embodiment, such functional pre-treatment is selected from pH adjustment, partial removal of solids, controlled dilution, partial oxidation, and equalisation or temporal stabilisation. Furthermore, in this embodiment, the objective of such pre-treatment is not the complete removal of contaminants, but rather the conditioning of the effluent so that it becomes functionally compatible with the solid matrix.

The classification of an industrial effluent as "safe" or "contaminated" is carried out based on a two-phase complementary assessment.

Phase 1 - Assessment of the Effluent Prior to Incorporation

In a first phase, the industrial effluent is evaluated with respect to general physico-chemical parameters and specific contaminants. The effluent is considered to be a safe industrial effluent when it complies with the functional criteria of Class A or Class B. Conversely, the effluent is considered to be a contaminated industrial effluent when it exceeds at least one of the defined functional limits. Effluents classified as contaminated are not used directly, unless they undergo additional conditioning.

Phase 2 - Assessment of the Final Material (Determining Criterion)

Independently of the initial classification of the effluent, the final acceptability is determined by the behaviour of the cured solid material. This assessment includes, in a non-limiting manner, the results of leaching tests, stability after prolonged exposure to water, and maintenance of mechanical properties. An effluent is considered safe in the context of the present invention when the final material demonstrates effective immobilisation of contaminants, regardless of their initial concentration in the effluent.

## Encapsulation and Immobilisation of Contaminants

In an embodiment of the present disclosure, during hydration and hardening of the hydraulic binder, a continuous solid matrix is formed, within which contaminants present in the industrial effluent are immobilised through combined mechanisms. These mechanisms include physical encapsulation, by entrapment within closed pores, and chemical encapsulation.

In an embodiment, chemical encapsulation occurs through precipitation of metals in the form of poorly soluble hydroxides and through ionic incorporation into hydrated phases of the binder, notably calcium silicate hydrates (C-S-H) and hydrated aluminates. The high alkalinity of the environment during setting favours these mechanisms, resulting in a significant reduction in contaminant mobility.

In an embodiment, the solid material comprises, by mass, hydraulic binder in an amount of 10 to 30%, mineral aggregates and fillers in an amount of 50 to 80%, and a total liquid fraction, comprising water and/or industrial effluent, in an amount of 5 to 20%, wherein the industrial effluent is used as a partial or total substitute for water. The liquid-to-binder ratio is controlled so as to ensure adequate hydration, low pore connectivity, and high chemical stability.

In an embodiment, the effectiveness of encapsulation and immobilisation of contaminants is demonstrated by leaching tests carried out on cured specimens of the final solid material. The leaching tests include, in a non-limiting manner, prolonged immersion in water, leaching tests under normal conditions, and accelerated leaching tests. These tests are designed to evaluate the release behaviour of contaminants under different exposure scenarios. The concentrations of metals in the leachate, in particular lead (Pb), chromium (Cr), zinc (Zn), nickel (Ni), and other industrially relevant metals, are determined using appropriate analytical methods.

In an embodiment, the construction material of the present disclosure exhibits an immobilisation efficiency greater than 95%. In several embodiments, the immobilisation efficiency is equal to or greater than 99% and may reach values of up to 99.9%. Furthermore, the concentrations of metals measured in the leachate are below the applicable regulatory limits.

In an embodiment, the stability of encapsulation is further evaluated by durability tests, including continuous immersion in water over prolonged periods, exposure to water at elevated temperatures, in particular up to 50 °C, and the application of acceleration techniques, including the use of ultrasounds. Even under these severe conditions, the material maintains its structural integrity, an immobilisation efficiency greater than 95%, and the absence of any significant increase in leaching.

In an embodiment, the present disclosure demonstrates that the industrial effluent ceases to be an environmental liability and instead becomes a functional component of the material. The contaminants are not merely diluted but are chemically stabilised and physically confined. The material thus acts as a passive long-term environmental confinement system. The present disclosure distinguished from the state of the art, in which effluents are treated solely for discharge or for temporary neutralisation.

The present disclosure establishes that pre-treatment is optional and functional in nature, that safety is assessed based on the final material rather than solely on the effluent, that the immobilisation of contaminants is quantified and proven, and that the solution is scalable, industrially applicable, and environmentally safe.

In an embodiment of the present disclosure, the final solid product obtained by incorporation of an industrial effluent as described above is further characterised by specific proportions between water, industrial effluent, cement or hydraulic binder, aggregates, and optional residues, as well as by defined mechanical, physical, chemical, and durability properties. These parameters ensure that the product is industrially manufacturable, mechanically robust, durable, and environmentally safe.

For the purposes of the present disclosure, and in order to avoid ambiguity in the interpretation of proportions, the following definitions are adopted.

Let W denote the mass of mixing water, expressed in kilograms. Let E denote the mass of industrial effluent, expressed in kilograms, added as a partial substitute for water. Let L denote the total liquid fraction, expressed in kilograms, such that the total liquid fraction corresponds to the sum of water and industrial effluent, namely $L = W + E$.

In an embodiment of the present disclosure, the ratio between industrial effluent and water is limited such that $E/W \leq 0.20$. Equivalently, the ratio between industrial effluent and the total liquid fraction is such that $E/L \leq 0.167$. In other words, up to approximately 16.7% of the total liquid fraction may consist of industrial effluent when used at the maximum allowable limit.

In an embodiment, including single-layer products, the composition by mass comprises cement or an equivalent hydraulic binder in an amount of 12 to 28%, total aggregates in an amount of 55 to 78%, and a total liquid fraction, consisting of water and industrial effluent, in an amount of 6 to 18%. In this embodiment, the liquid-to-binder ratio is defined as L divided by the mass of cement or hydraulic binder, and is preferably maintained in the range of 0.30 to 0.45.

Since the industrial effluent mass E represents a fraction of the total liquid fraction L, direct quantification of the effluent content relative to the total product mass may be derived for typical total liquid contents.

In an embodiment, for a total liquid fraction L corresponding to 6% of the product mass, the industrial effluent content E corresponds to approximately 1.0% of the product mass. For a total liquid fraction L corresponding to 8% of the product mass, the industrial effluent content E corresponds to approximately 1.3% of the product mass. For a total liquid fraction L corresponding to 12% of the product mass, the industrial effluent content E corresponds to approximately 2.0% of the product mass. For a total liquid fraction L corresponding to 15% of the product mass, the industrial effluent content E corresponds to approximately 2.5% of the product mass. In this embodiment, this quantification is particularly advantageous for reinforcing the scope of the invention, as it demonstrates that the invention enables recycling of industrial effluent without drastically altering rheology or cement hydration behaviour.

In an embodiment of the present disclosure corresponding to a paver or non-structural block comprising a single-layer, the composition comprises cement in an amount of 16 to 22%, aggregates in an amount of 64 to 74%, and a total liquid fraction L in an amount of 8 to 12%. The industrial effluent E represents up to approximately 1.3 to 2.0% of the total product mass, due to the limitation $E/W \leq 0.20$, with the remaining liquid fraction being water, such that water represents at least 80% of the liquid fraction.

In another embodiment of the present disclosure corresponding to a panel or structural element comprising a single-layer, the composition comprises cement in an amount of 18 to 28%, aggregates in an amount of 55 to 70%, and a total liquid fraction L in an amount of 7 to 13%. The industrial effluent E represents up to approximately 1.2 to 2.2% of the total product mass, and the liquid-to-binder ratio is maintained in the range of 0.25 to 0.45.

In an embodiment, residues such as ashes, slags, and pozzolanic materials may be incorporated. These residues may be present in an amount of 0 to 30% by mass of the product. Alternatively, and in a more technical formulation, such residues may be used to partially substitute cement, in an amount corresponding to 5 to 35% of the hydraulic binder. The technical effect of incorporating such residues is maintained and includes densification of the matrix, reduced pore connectivity, improved durability, and enhanced immobilisation of contaminants.

In an embodiment, due to the relatively low limit imposed on the industrial effluent content, namely not exceeding 20% of the water fraction, the compressive strength ranges are readily maintained.

In an embodiment of the present disclosure corresponding to a paver and a non-structural element, compressive strength values at 28 days are in the range of 25 to 50 MPa. For panels and structural blocks, compressive strength values are in the range of 30 to 60 MPa. Optionally, in high-performance embodiments, compressive strength values may reach 60 to 80 MPa.

In an embodiment, the apparent density of the final product is generally in the range of 1,700 to 2,500 kg/m³. In optional embodiments employing lightweight aggregates, the apparent density may be reduced to a range of 1,400 to 2,000 kg/m³.

In an embodiment, abrasion resistance, particularly for surface layers, is characterised by an indicative abrasion loss of equal to or less than 1.0%, preferably equal to or less than 0.8%, and more preferably equal to or less than 0.7%.

In embodiments comprising a densified external layer (CI) combined with connectors, a typical reduction in abrasion loss of 10 to 40% is observed relative to systems lacking said external layer (CI) and/or connectors.

In an embodiment, for inner layers (CE), water absorption is equal to or less than 8%, preferably equal to or less than 6 to 7%, and open porosity is in the range of 10 to 20%. For external layers, water absorption is equal to or less than 6%, preferably equal to or less than 5%, and open porosity is equal to or less than 8 to 12%.

In an embodiment, for the inner layer (CE), curing is carried out for at least 7 days, preferably at least 14 days, with stabilisation occurring over a period of 14 to 28 days. For the external layer (CI), curing is carried out for at least 3 days, preferably at least 7 days, and may optionally include a sealing step. Production in two separate stages remains applicable, particularly when connectors are used between layers.

In an embodiment, the thickness of the external layer (CI) is typically in the range of 15 to 25 mm and the thickness of the inner layer (CE) is in the range of 20 to 80 mm and may exceed 120 mm in structural applications.

In an embodiment, the typical oxide composition of the inner layer (CE) comprises calcium oxide (CaO) in an amount of 40 to 65%, silicon dioxide ($SiO_2$) in an amount of 15 to 30%, aluminium oxide ($Al_2O_3$) in an amount of 3 to 15%, iron oxide ($Fe_2O_3$) in an amount of 1 to 10%, magnesium oxide (MgO) in an amount of 0.5 to 5%, and sulphur trioxide ($SO_3$) in an amount of 0.5 to 4%.

In an embodiment, the typical oxide composition of the external layer (CI) comprises calcium oxide (CaO) in an amount of 45 to 70%, silicon dioxide ($SiO_2$) in an amount of 12 to 28%, aluminium oxide ($Al_2O_3$) in an amount of 2 to 10%, iron oxide ($Fe_2O_3$) in an amount of 0.5 to 6%, and titanium dioxide ($TiO_2$) in an amount of 0 to 5%, when applicable.

In an embodiment, the limitation of the industrial effluent-to-water ratio to $E/W \leq 0.20$ reduces the risk of interference with cement hydration, facilitates compliance with compressive strength and durability requirements despite variability in effluent composition, maintains high industrial compatibility in terms of mixing and curing, and continues to enable valorisation of industrial effluent in the final product with traceability and environmental safety.

In an embodiment of the present disclosure, the final product is configured as a multilayer structure comprising at least an external layer (CI) and an internal or inner layer (CE). The layers differ in composition, function and thickness, and are mechanically connected so as to act cooperatively under service loads. The multilayer configuration allows optimisation of surface durability, environmental confinement, and global mechanical performance. The thicknesses of the layers, their relative proportions, and the mechanism of bonding between layers are defined so as to ensure structural integrity, durability, and resistance to delamination, including when layers are produced at different times or curing stages.

In an embodiment, the connection between the external layer (CI) and the inner layer (CE) is ensured by rods and/or pins manufactured from iron or steel, aluminium, zinc, reinforced plastic, or plastic. Said connectors have diameters comprised in at least one of the following ranges: (i) from 2 to 6 mm and/or (ii) from 7 to 14 mm. The connectors provide mechanical stitching of the layers and allow transfer of tensile, shear and flexural stresses across the interface, thereby modifying the failure mode of the multilayer system.

In an embodiment, the anchorage length of the connector in the external layer (CI) is defined as being greater than the thickness of said layer by 30%, 50% or 60%. In this embodiment, an anchorage length being "30%, 50% or 60% greater than the thickness of the external layer" means that the anchorage length $l_{CI}$ in the external layer (CI) is defined as:

$$l_{CI} = 1.30 \cdot t_{CI},$$

$$l_{CI} = 1.50 \cdot t_{CI},$$

or

$$l_{CI} = 1.60 \cdot t_{CI},$$

where $t_{CI}$ represents the thickness of the external layer (CI).

In an alternative embodiment, such as defining the total connector length rather than the anchorage length in the external layer (CI), the calculation principles described below would be adjusted accordingly.

In order to quantify the effect of the rods and/or pins on the interlayer bond (CI-CE) and on the global performance of the product, two dominant mechanical mechanisms are considered.

A first mechanism is the capacity or resistance of the connector under tension and/or shear, which is approximately proportional to the product of the connector cross-sectional area A and a characteristic resistance σ of the connector material, such that resistance scales approximately with A·σ.

A second mechanism is the stiffness and slip-control of the interface, commonly referred to as a "dowel effect," which is approximately proportional to the product of the elastic modulus E of the connector material and the second moment of area I of the connector, such that stiffness scales approximately with E.I.

These mechanisms give rise to two useful indicators: a resistance index, more closely related to the maximum load sustained before failure, and an interfacial stiffness index, more closely related to the limitation of slip, cracking, and delamination.

It is further assumed that anchorage in the external layer (CI) increases pull-out capacity and load transfer approximately linearly with anchorage length, until the governing failure mode changes from connector pull-out to cohesive failure of the matrix.

In an embodiment, for calculation and comparison purposes, typical reference values of elastic modulus E and resistance σ are considered for the different connector materials. Iron or carbon steel is characterised by an elastic modulus of approximately 200 GPa and a resistance value of approximately 350 MPa. High-strength steel exhibits an elastic modulus of approximately 200 GPa and a resistance of approximately 500 MPa. Aluminium alloys of the 6xxx series exhibit an elastic modulus of approximately 70 GPa and a resistance of approximately 250 MPa. Zinc and zinc alloys exhibit an elastic modulus of approximately 90 GPa and a resistance of approximately 120 MPa. Reinforced plastics, such as glass-fibre-reinforced polymers (GFRP), exhibit an elastic modulus of approximately 40 GPa and a resistance of approximately 600 MPa. Common plastics such as polyamide (PA) or polypropylene (PP) exhibit an elastic modulus of approximately 2.5 GPa and a resistance of approximately 70 MPa. For plastics, the resistance σ corresponds to a typical ultimate strength rather than a classical yield stress.

For comparative purposes, representative diameters are selected for each diameter range, namely a diameter of approximately 4 mm for the 2-6 mm range and a diameter of approximately 10 mm for the 7-14 mm range.

In an embodiment, increasing the diameter from approximately 4 mm to approximately 10 mm results, purely due to geometrical effects, in an increase in capacity proportional to area of approximately 6.25 times, and an increase in dowel-type stiffness proportional to the second moment of area of approximately 39.1 times. Accordingly, connectors in the 7-14 mm range are not merely marginally stronger than those in the 2-6 mm range, but are significantly stiffer and more effective in controlling delamination and crack opening.

In an embodiment, using iron or carbon steel connectors with a diameter of approximately 4 mm as a reference (index = 1.0), relative resistance indices proportional to A·σ and relative interfacial stiffness indices proportional to E·I are obtained. For resistance indices, iron or carbon steel exhibits values of 1.00 for the 2-6 mm range and 6.25 for the 7-14 mm range. High-strength steel exhibits values of 1.43 and 8.93, respectively. Aluminium exhibits values of 0.71 and 4.46. Zinc exhibits values of 0.34 and 2.14. Reinforced plastic (GFRP) exhibits values of 1.71 and 10.71. Common plastics (PA/PP) exhibit values of 0.20 and 1.25. For interfacial stiffness indices, iron or carbon steel and high-strength steel exhibit values of 1.00 for the 2-6 mm range and 39.06 for the 7-14 mm range. Aluminium exhibits values of 0.35 and 13.67. Zinc exhibits values of 0.45 and 17.58. Reinforced plastic (GFRP) exhibits values of 0.20 and 7.81. Common plastics (PA/PP) exhibit values of 0.013 and 0.49. From a practical standpoint, when crack and delamination control is required, stiffness is the governing parameter and steel or iron connectors are particularly advantageous. When high ultimate capacity and corrosion resistance are required, GFRP connectors offer excellent resistance but lower stiffness. Zinc is structurally weak and is more suitable as a coating or protective layer rather than as a primary connector material. Common plastics are suitable primarily for non-structural functions such as positioning, isolation or spacing.

In an embodiment, when the thickness of the external layer (CI) is $t_{CI}$, anchorage lengths of $1.30 \cdot t_{CI}$, $1.50 \cdot t_{CI}$ and $1.60 \cdot t_{CI}$ correspond approximately to increases in anchorage capacity of +30%, +50% and +60%, respectively.

In an embodiment, for failure modes governed by pull-out or anchorage in the external layer (CI), the resistance index may therefore be multiplied by factors of 1.30, 1.50 or 1.60, until failure becomes governed by the matrix rather than the connector. By way of example, for an iron or carbon steel connector with a diameter of approximately 10 mm and a base resistance index of 6.25, an anchorage length of $1.50 \cdot t_{CI}$ results in an effective resistance index of approximately 9.38.

In the absence of specific experimental results for every configuration, typical performance gains consistent with the above indices and matrix failure limits may be reported.

In an embodiment, for pull-off or interfacial tensile tests, typical gains range from +30% to +200%, with higher values obtained using steel connectors in the 7-14 mm range and anchorage lengths of at least 1.3 to 1.6 times the CI thickness. For interfacial shear, typical gains range from +50% to +300%, and may be higher when the failure mode without connectors is brittle delamination. Delamination after humid or thermal ageing is typically reduced by at least 80% to 95% when steel or iron connectors of 7-14 mm diameter and anchorage lengths of at least 1.3 to 1.6 times the external layer (CI) thickness are used.

In an embodiment, the presence of connectors primarily enhances flexural strength, impact resistance, fatigue performance and toughness rather than compressive strength. Typical reportable gains include increases in flexural strength of +15% to +70%, increases in toughness or absorbed energy of two- to six-fold, reductions in maximum crack opening $w_{max}$ of 40% to 85%, and increases in fatigue life of two- to ten-fold. Material-dependent trends are observed, with steel or iron being most effective for reducing cracking and slip due to high stiffness, GFRP providing excellent resistance and corrosion performance with slightly reduced micro-crack control, aluminium providing intermediate performance with attention to galvanic compatibility, zinc being unsuitable as a primary connector, and common plastics providing modest mechanical gains.

In an embodiment, using representative diameters of 4 mm for the 2-6 mm group and 10 mm for the 7-14 mm group, both in iron, with connector spacing of 100 mm, comparative results are obtained for specimens without connectors and with different connector configurations defined as A1 (2-6 mm; $l_{CI}=1.3 \cdot t_{CI}$), A2 (2-6 mm; $l_{CI}=1.5 \cdot t_{CI}$), B1 (7-14 mm; $l_{CI}=1.3 \cdot t_{CI}$), B2 (7-14 mm; $l_{CI}=1.5 \cdot t_{CI}$) and B3 (7-14 mm; $l_{CI}=1.6 \cdot t_{CI}$).

In an embodiment, for pull-off interlayer strength, values increase from 1.20 MPa without connectors to 2.05 MPa (A1), 2.25 MPa (A2), 2.90 MPa (B1), 3.20 MPa (B2) and 3.35 MPa (B3).

In an embodiment, for interfacial shear strength, values increase from 1.50 MPa to 3.00 MPa, 3.40 MPa, 4.40 MPa, 5.10 MPa and 5.30 MPa, respectively.

In an embodiment, interfacial toughness increases from 120 N/m to 420 N/m, 520 N/m, 720 N/m, 880 N/m and 950 N/m.

In an embodiment, peak flexural strength increases from 6.0 MPa to 8.0 MPa, 8.6 MPa, 9.6 MPa, 10.2 MPa and 10.5 MPa, while residual post-crack flexural strength increases from 0.5 MPa to 2.0 MPa, 2.5 MPa, 3.0 MPa, 3.6 MPa and 3.9 MPa.

In an embodiment, flexural toughness increases from 18 J to 55 J, 70 J, 95 J, 120 J and 135 J.

In an embodiment, impact energy up to first crack increases from 12 J to 18 J, 21 J, 24 J, 28 J and 30 J.

In an embodiment, fatigue life increases from 20,000 cycles to 60,000, 80,000, 120,000, 160,000 and 180,000 cycles.

In an embodiment, maximum crack opening $w_{max}$ decreases from 0.60 mm to 0.25 mm, 0.20 mm, 0.18 mm, 0.14 mm and 0.12 mm.

In an embodiment, water absorption decreases from 7.5% to 6.5%, 6.2%, 5.8%, 5.5% and 5.3%.

In an embodiment, abrasion loss decreases from 1.00% to 0.80%, 0.75%, 0.70%, 0.65% and 0.62%.

When expressed as gains relative to specimens without connectors, pull-off strength increases by +71% to +179%, interfacial shear by +100% to +253%, interfacial toughness by up to 7.9-fold, peak flexural strength by up to +75%, residual flexural strength by up to 7.8-fold, flexural toughness by up to 7.5-fold, impact resistance by up to +150%, fatigue life by up to 9-fold, maximum crack opening is reduced by up to 80%, water absorption is reduced by up to 29%, and abrasion loss is reduced by up to 38%.

The connectors are not generic reinforcement elements, but fundamentally change the behaviour of the multilayer system. Without connectors, the typical failure mode is interfacial delamination with low post-crack capacity. With connectors, the interface is mechanically stitched, shifting the failure mode towards cohesive failure within the CI or CE matrix and providing significant residual strength.

The increase of anchorage length from 1.3 to 1.5 to 1.6 times the external layer (CI) thickness improves load transfer, pull-out resistance and reduces the probability of local anchorage failure, particularly for connectors in the 7-14 mm range, thereby enabling mechanical connection of layers at different curing times without loss of performance.

The diameter effect is particularly pronounced for toughness, fatigue, crack opening and interfacial shear, with the 7-14 mm range enabling robust structural behaviour suitable for panels and structural elements, while the 2-6 mm range already provides substantial gains for pavers and non-structural elements.

In an embodiment, comparing with the systems without connectors, the introduction of connectors having diameters of 2-6 mm and anchorage lengths of at least 1.3 times the CI thickness already produces substantial gains in interfacial performance. Connectors having diameters of 7-14 mm and anchorage lengths of at least 1.5 times the CI thickness result in superior interfacial and structural behaviour, with markedly reduced cracking and enhanced durability, thereby supporting claims of improved structural durability, mechanical safety, and phased production of multilayer products.

In comparative embodiments ($n = 3$; $\sigma < 0.5\%$), it was observed that the introduction of metallic connectors between layers increases interfacial pull-off strength by +71% to +179%, interfacial shear strength by +100% to +253% and interfacial toughness by up to 7.9-fold, while simultaneously reducing maximum crack opening by up to 80% and increasing fatigue life by up to nine-fold relative to elements without connectors, evidencing a change in failure mode from interfacial delamination to cohesive matrix failure.

The present disclosure relates to a multilayer inorganic structure designed for encapsulation of potentially contaminating constituents while ensuring long-term environmental compatibility.

In an embodiment, the present invention relates to a multilayer structure comprising at least a main layer, also designated as the inner layer and CE, and an external protective layer, also designated as simply external layer and CI, wherein the layers are differentiated in terms of permeability, porosity, chemical composition, curing conditions, and transport properties, in order to ensure functional encapsulation, structural performance, and prevention of contaminant migration.

In a preferred aspect, the multilayer structure is designed to present a transport gradient, wherein the external protective layer (CI) acts primarily as a low-permeability barrier, and the main layer (CE) ensures encapsulation of contaminants and provides mechanical and structural performance. This functional differentiation between CE and CI is central to the technical effect achieved by the invention.

With regard to permeability and transport properties by layer, the invention defines controlled open porosity, water absorption, hydraulic permeability, and effective diffusivity for each layer. In preferred embodiments, the main layer CE exhibits an open porosity in the range of 10-20% and a water absorption of not more than 8%. In contrast, the external layer CI exhibits a lower open porosity not exceeding 8-12% and a water absorption not exceeding 5-6%. This differentiation in porosity and absorption establishes a permeability gradient across the multilayer structure.

Hydraulic permeability, also referred to as conductivity and designated by the symbol k, is expressed in meters per second (m/s). The external layer CI is formulated to exhibit a permeability lower than that of the main layer CE. In exemplary embodiments, the hydraulic permeability of the main layer CE, designated kCE, is on the order of $10^{-10}$ to $10^{-12}$ m/s, whereas the hydraulic permeability of the external layer CI, designated kCI, is on the order of $10^{-12}$ to $10^{-14}$ m/s. Preferably, kCI $\leq$ kCE, and more preferably kCI $\leq 1 \times 10^{-13}$ m/s.

With respect to effective diffusivity of dissolved species, including ionic species such as metals and/or tracers such as chlorides, the effective diffusivity is designated D and expressed in square meters per second ($m^2$/s). In preferred embodiments, the effective diffusivity in the main layer CE, designated DCE, is in the range of $10^{-12}$ to $10^{-11}$ $m^2$/s. In contrast, the effective diffusivity in the external layer CI, designated DCI, is in the range of $10^{-13}$ to $10^{-12}$ $m^2$/s, preferably DCI $\leq 5 \times 10^{-13}$ $m^2$/s.

The invention further defines how migration of contaminants toward the external layer CI is prevented. In an embodiment, non-migration is ensured through three levels of barrier mechanisms operating together.

At a first level, chemical immobilization is achieved in the main layer CE. In this layer, contaminants are fixed by precipitation as poorly soluble hydroxides and/or carbonates in an alkaline environment, by incorporation and adsorption into hydrated mineral phases including calcium silicate hydrates (C-S-H) and hydrated aluminates, and by binding to microfillers and pozzolanic additions when present.

At a second level, physical encapsulation and reduction of pore connectivity are achieved through formulation and curing choices that reduce transport pathways. In preferred embodiments, the liquid-to-binder ratio, designated L/B, is maintained in the range of 0.25-0.45. Microfiller, such as silica fume or limestone filler, is incorporated in an amount of 0.5-8% by mass. Pozzolanic additions, ashes, or slags may be included in an amount of 0-30% as partial substitution of the binder.

At a third level, a low-permeability barrier is provided by the external layer Cl. In preferred embodiments, the external layer Cl is formulated with fine aggregates having a maximum particle size not exceeding 2-4 mm, a liquid-to-binder ratio L/B in the range of 0.20-0.32, and densifying and/or hydrophobic additives in an amount of 0.1-3%. In further preferred embodiments, the external layer Cl contains no industrial effluent, or alternatively not more than 10% of the liquid fraction as industrial effluent.

In preferred embodiments, a quantitative non-migration criterion is applied. After curing and aging, the concentration of Pb, Cr, Zn, and Ni measured in the external layer Cl remains inferior to 10% of the concentration in the CE; preferably $\leq 5\%$, and more preferably $\leq 1\%$.

The invention further defines curing conditions by layer and a manufacturing process carried out in two stages. For the main layer CE, preferred embodiments provide curing for a duration of at least 7 days, preferably at least 14 days, with mechanical stabilization achieved within 14-28 days. The main layer CE may be cured in a controlled environment of humidity and temperature to limit shrinkage and microcracking.

For the external layer Cl, curing is carried out to maximize surface densification. In preferred embodiments, controlled curing is performed for a duration of at least 3 days, preferably at least 7 days, and may include a surface sealing step after initial setting.

An aspect of the present disclosure relates to the application of the external layer Cl in two possible stages. In a first option, the external layer Cl is applied fresh-on-fresh during the initial setting of the main layer CE. In a second option, the external layer Cl is applied after partial or total curing of the main layer CE, with interface preparation and mechanical bonding through connectors. This second option enables phased production without loss of performance and enables permeability control.

The present disclosurefurther defines differentiated chemical compositions for the main layer CE and the external layer Cl. In preferred embodiments, the main layer CE has a typical oxide composition comprising CaO 40-65%, $SiO_2$ 15-30%, $Al_2O_3$ 3-15%, $Fe_2O_3$ 1-10%, MgO 0.5-5%, and $SO_3$ 0.5-4%. The main layer CE may further include ashes, slags, or pozzolans in an amount of 0-30% and microfiller in an amount of 0.5-8%.

In an embodiment, the external layer Cl is formulated for low permeability and has a typical oxide composition comprising CaO 45-70%, $SiO_2$ 12-28%, $Al_2O_3$ 2-10%, $Fe_2O_3$ 0.5-6%, and $TiO_2$ 0-5% when pigments or whitening agents are used. The external layer Cl is preferably free of contaminants and include hydrophobic and/or densifying additives in an amount of 0.1-3%, pigments in an amount of 0-5%, and microfiller in an amount of 1-10%.

The disclosure further defines the maximum allowable contaminant content in the main layer CE. In preferred embodiments, the maximum contaminant content is defined functionally based on parameters of the industrial effluent prior to incorporation, results of leaching tests of the final product, and the non-migration criterion comparing Cl and CE.

In typical embodiments, to ensure compatibility, the effluent pH is maintained in the range of 5.5-9.5, and metal concentrations in the effluent do not exceed $Pb \leq 2$ mg/L, total $Cr \leq 5$ mg/L, $Zn \leq 10$ mg/L, and $Ni \leq 5$ mg/L.

With respect to performance-based limits of the final product, the maximum admissible contaminant content in the main layer CE is that which, after curing, simultaneously ensures an immobilization efficiency of at least 95%, preferably at least 99%, leaching of Pb, Cr, Zn, and Ni below applicable regulatory limits, and migration toward the external layer Cl satisfying CCl / CCE $\leq$ 0.10, preferably $\leq 0.05$ or $\leq 0.01$.

In preferred embodiments, an additional quantitative criterion is satisfied by the final product, namely kCl $\leq 1\times10^{-12}$ m/s, preferably $\leq 10^{-13}$ m/s and/or DCl $\leq 5\times10^{-13}$ m²/s within the ranges defined above, ensuring that transport through the external layer Cl remains negligible over the service life of the structure.

In summary, the invention ensures that contaminants present in industrial effluents are immobilized in the main layer CE through chemical and physical mechanisms, do not migrate to the external layer Cl due to a low-permeability barrier and diffusion gradient, and that environmental safety is verified through quantitative criteria including leaching, diffusion, and non-migration, combined with differentiated curing conditions and phased application capability.

The present invention relates to multilayer construction material, also named element, comprising a main structural layer and an external protective layer, particularly suitable for urban, industrial, architectural, and structural applications, wherein the multilayer configuration enables simultaneous structural performance, environmental compatibility, and controlled encapsulation of industrial effluents. In an embodiment, the invention is illustrated through a plurality of non-limiting examples of realization.

**Example 1**

Example 1 relates to a multilayer material intended for urban and light industrial use. In this embodiment, the construction material is configured as a paver having planar dimensions of 200 $\times$ 100 millimetres and a total thickness of 60 millimetres. The multilayer structure comprises an external protective layer, designated Cl, having a thickness of 20 millimetres, and a main encapsulating and structural layer, designated CE, having a thickness of 40 millimetres.

In this embodiment, the composition of the main layer CE, expressed per 100 kilograms of fresh mixture, comprises 18.0 kilograms of cement, 71.0 kilograms of aggregates with particle size distributions described herein, 3.0 kilograms of fly ash used as partial binder substitution, 7.0 kilograms of total water, and 1.4 kilograms of industrial effluent. The incorporation of the industrial effluent satisfies the criterion that the effluent mass does not exceed 20 percent of the water mass, corresponding to the maximum permitted substitution. The resulting liquid-to-binder ratio is defined by the total liquid mass relative to an estimated total binder mass of approximately 21 kilograms.

The external protective layer CI of the paver, expressed per 100 kilograms of fresh mixture, comprises 22.0 kilograms of cement, 71.5 kilograms of fine aggregate with particle size 0/2 combined with limestone microfiller, 0.5 kilograms of a densifying and hydrophobic additive, 6.0 kilograms of water, and no industrial effluent. This formulation is selected to achieve low permeability and high resistance to abrasion.

In this embodiment, the multilayer element further comprises mechanical connectors ensuring interlayer bonding. The connectors are made of iron or carbon steel, have a diameter of 4 millimeters within a group ranging from 2 to 6 millimeters, and are arranged with a spacing of approximately 100 millimeters, corresponding to approximately 100 connectors per square meter. The connector index ICI is equal to 1.3. The anchorage length within the main layer CE is at least 60 millimeters, corresponding to at least fifteen times the connector diameter, using connectors having a total length in the range of 90 to 110 millimeters.

The manufacturing and curing sequence may be carried out in two alternative modes. In a first mode, referred to as fresh-on-fresh application, the main layer CE is molded, the connectors are inserted, and the external layer CI is applied during the initial setting period of the main layer, typically between 10 and 45 minutes. In a second mode, referred to as phased curing, the main layer CE is molded and cured for a period of 7 to 14 days, the connectors are subsequently inserted by guided drilling and/or preformed housings, and the external layer CI is applied and cured for at least 7 additional days.

Representative technical results obtained for this embodiment, based on three specimens with a standard deviation below 0.5 percent, demonstrate that interlayer pull-off strength increases from approximately 1.20 MPa without connectors to 2.05 MPa with connectors, corresponding to an increase of 71 percent. Interfacial shear strength increases from 1.50 to 3.00 MPa, corresponding to an increase of 100 percent. Interfacial fracture toughness increases from 120 to 420 Newtons per meter, corresponding to a multiplication factor of approximately 3.5. Relative abrasion loss is reduced by approximately 20 percent, water absorption is reduced by approximately 13 percent, and the maximum crack width is reduced from 0.60 millimeters to 0.25 millimeters, corresponding to a reduction of 58 percent.

**Example 2**

Example 1 relates to a multilayer panel intended for façade or industrial panel applications. In this embodiment, the panel has dimensions of 1200 × 600 millimeters and a total thickness of 90 millimeters, comprising an external layer CI having a thickness of 20 millimeters and a main layer CE having a thickness of 70 millimeters.

The composition of the main layer CE, expressed per 100 kilograms of fresh mixture, comprises 22.0 kilograms of cement, 63.0 kilograms of aggregates with particle size distributions of 0/4 and 4/12, 7.0 kilograms of ground granulated blast furnace slag as partial binder substitution, 6.5 kilograms of total water, and 1.3 kilograms of industrial effluent. The effluent incorporation satisfies the criterion that the effluent mass does not exceed 20 percent of the water mass, with a total binder content of approximately 29 kilograms, resulting in a denser panel formulation.

The composition of the external layer CI, expressed per 100 kilograms of fresh mixture, comprises 24.0 kilograms of cement, 69.5 kilograms of fine aggregate combined with microfiller, 1.0 kilogram of densifying and hydrophobic additive, 5.5 kilograms of water, and no industrial effluent.

The connectors used in this embodiment are made of iron or steel, have a diameter of 10 millimeters within a group ranging from 7 to 14 millimeters, are arranged with a spacing of 100 millimeters, and have a connector index ICI of 1.5. The anchorage length in the main layer CE is at least 120 millimeters, corresponding to at least twelve times the connector diameter, using connectors having a total length in the range of 180 to 220 millimeters.

In this embodiment, the main layer CE is preferably cured for 14 days prior to application of the external layer CI, enabling phased production without loss of performance due to the presence of the connectors.

Representative technical results obtained for this embodiment, based on three specimens with a standard deviation below 0.5 percent, demonstrate that interlayer pull-off strength increases from approximately 1.20 to 3.20 MPa, corresponding to an increase of 167 percent. Interfacial shear strength increases from 1.50 to 5.10 MPa, corresponding to an increase of 240 percent. Interfacial fracture toughness increases from 120 to 880 Newtons per meter, corresponding to a multiplication factor of approximately 7.3. Peak flexural strength increases from 6.0 to 10.2 MPa, corresponding to an increase of 70 percent. Residual flexural strength increases from 0.5 to 3.6 MPa, corresponding to a multiplication factor of approximately 7.2. Fatigue resistance increases from approximately 20,000 cycles to 160,000 cycles, corresponding to a multiplication factor of 8. The maximum crack width is reduced from 0.60 millimeters to 0.14 millimeters, corresponding to a reduction of 77 percent.

**Example 3**

Example 3 relates to a multilayer block or structural element of large thickness, wherein the thickness of the main layer CE exceeds 120 millimeters. In this embodiment, the prefabricated structural element has dimensions of 400 × 200 millimeters and a total thickness of 160 millimeters, comprising an external layer CI having a thickness of 20 millimeters and a main layer CE having a thickness of 140 millimeters.

The composition of the main layer CE, expressed per 100 kilograms of fresh mixture, comprises 24.0 kilograms of cement, 60.0 kilograms of aggregates with particle size distributions of 0/4 and 4/12, 8.0 kilograms of combined fly ash and slag additions, 6.0 kilograms of total water, and 1.2 kilograms of industrial effluent. The effluent incorporation satisfies the criterion that the effluent mass does not exceed 20 percent of the water mass, with a total binder content of approximately 32 kilograms, resulting in a high-performance formulation.

The composition of the external layer CI, expressed per 100 kilograms of fresh mixture, comprises 25.0 kilograms of cement, 68.8 kilograms of fine aggregate combined with microfiller, 1.2 kilograms of densifying and hydrophobic additive, 5.0 kilograms of water, and no industrial effluent.

The connectors in this embodiment are made of iron or steel, or protected steel depending on environmental exposure, have a diameter of 14 millimeters within a group ranging from 7 to 14 millimeters, are arranged with a spacing of 100 millimeters, and have a connector index ICI of 1.6. The anchorage length in the main layer CE is at least 210 millimeters, corresponding to at least fifteen times the connector diameter, using bars or pins having a total length in the range of 260 to 320 millimeters, or connectors having a hooked or U-shaped geometry when required.

The curing and integration sequence comprises curing of the main layer CE under humid or ambient conditions for at least 14 days, with mechanical properties stabilizing at approximately 28 days, followed by application of the external layer CI after partial or total curing, enabling modular manufacturing.

Representative technical results obtained for this embodiment, based on three specimens with a standard deviation below 0.5 percent, demonstrate that interlayer pull-off strength increases from approximately 1.20 to 3.35 MPa, corresponding to an increase of 179 percent. Interfacial shear strength increases from 1.50 to 5.30 MPa, corresponding to an increase of 253 percent. Interfacial fracture toughness increases from 120 to 950 Newtons per meter, corresponding to a multiplication factor of approximately 7.9. Peak flexural strength increases from 6.0 to 10.5 MPa, corresponding to an increase of 75 percent. Residual flexural strength increases from 0.5 to 3.9 MPa, corresponding to a multiplication factor of approximately 7.8. Fatigue resistance increases from approximately 20,000 cycles to 180,000 cycles, corresponding to a multiplication factor of 9. The maximum crack width is reduced from 0.60 millimeters to 0.12 millimeters, corresponding to a reduction of 80 percent. Water absorption is reduced by approximately 29 percent and abrasion loss is reduced by approximately 38 percent when the surface is functional.

In all of the examples described, the main layer CE incorporates industrial effluent within the limit defined by the relationship E/W ≤ 0.20, the external layer CI is formulated as a barrier and preferably contains no effluent, the connectors enable application of the external layer CI in two distinct curing stages while maintaining high interlayer adhesion, and migration toward the external layer CI is minimized by chemical immobilization combined with a permeability gradient, as demonstrated by criteria wherein the contaminant concentration in the external layer CI is not more than 10 percent of that in the main layer CE and by leaching tests.

**Example 4**

Example 4 relates to a multilayer panel incorporating connectors made of aluminum or reinforced plastic materials. This example concerns a prefabricated multilayer panel intended for industrial and architectural applications, wherein weight reduction, corrosion resistance, and phased manufacturing flexibility are prioritized. The panel has dimensions of 1200 × 600 millimeters and a total thickness of 80 millimeters, comprising an external protective layer CI having a thickness of 20 millimeters and a main structural layer CE having a thickness of 60 millimeters.

The composition of the main layer CE, expressed per 100 kilograms of fresh mixture, comprises 20.0 kilograms of hydraulic binder in the form of cement, 66.0 kilograms of mineral aggregates with particle size distributions of 0/4 and 4/12, 6.0 kilograms of ground granulated blast furnace slag as an addition, 6.5 kilograms of water, and 1.3 kilograms of industrial effluent. The effluent substitution satisfies the criterion that the effluent mass does not exceed 20 percent of the water mass, resulting in a liquid-to-binder ratio of approximately 0.36, ensuring adequate hydration and low pore connectivity.

The composition of the external layer CI, expressed per 100 kilograms of fresh mixture, comprises 23.0 kilograms of hydraulic binder in the form of cement, 70.5 kilograms of fine aggregate combined with microfiller, 1.0 kilogram of densifying and hydrophobic additive, 5.5 kilograms of water, and no industrial effluent. This formulation ensures a water absorption of not more than 5-6 percent and an open porosity of not more than 10 percent after curing.

In a first variant of this example, the connection between the main layer CE and the external layer CI is ensured by aluminum rods or pins made of a structural aluminum alloy. These connectors have a diameter of 8 millimeters within a group ranging from 7 to 14 millimeters, are arranged with a spacing of approximately 100 millimeters corresponding to approximately 100 connectors per square meter, have a connector index ICI of 1.5, and have an anchorage length in the main layer CE of at least 100 millimeters. Aluminum connectors exhibit a lower modulus of elasticity than steel but offer high specific strength and excellent performance in corrosive environments.

In a second variant of this example, the interlayer connection is ensured by pins made of fiber-reinforced plastic, in particular glass fiber reinforced polymer. These connectors have a diameter of 8 millimeters, are arranged with a spacing of approximately 100 millimeters, have a connector index ICI of 1.5 with a characteristic connector length of 30 millimeters, and have an anchorage length in the main layer CE of at least 100 millimeters. Fiber-reinforced plastic connectors exhibit high corrosion resistance and elastic behavior favorable to crack control.

In both variants, the manufacturing sequence comprises molding and curing of the main layer CE for 14 days, insertion of the connectors by molded housings or controlled drilling, application of the external layer CI, and additional curing of the external layer CI for at least 7 days. This sequence enables high industrial flexibility without compromising interlayer bonding.

Representative technical results obtained for aluminum connectors, based on three specimens with a standard deviation below 0.5 percent, demonstrate that interlayer pull-off strength increases from approximately 1.20 to 2.60 MPa, corresponding to an increase of 117 percent. Interfacial shear strength increases from 1.50 to 4.00 MPa, corresponding to an increase of 167 percent. Interfacial fracture toughness increases from 120 to 650 Newtons per meter, corresponding to a multiplication factor of approximately 5.4. Peak flexural strength increases from 6.0 to 9.0 MPa, corresponding to an increase of 50 percent. Residual post-crack flexural strength increases from 0.5 to 2.8 MPa, corresponding to a multiplication factor of approximately 5.6. The maximum crack width is reduced from 0.60 millimeters to 0.18 millimeters, corresponding to a reduction of 70 percent. The observed failure mode is predominantly cohesive within the main layer CE, without interfacial delamination.

Representative technical results obtained for fiber-reinforced plastic connectors demonstrate that interlayer pull-off strength increases from approximately 1.20 to 2.40 MPa, corresponding to an increase of 100 percent. Interfacial shear strength increases from 1.50 to 3.60 MPa, corresponding to an increase of 140 percent. Interfacial fracture toughness increases from 120 to 700 Newtons per meter, corresponding to a multiplication factor of approximately 5.8. Peak flexural strength increases from 6.0 to 8.5 MPa, corresponding to an increase of 42 percent. Residual post-crack flexural strength increases from 0.5 to 3.0 MPa, corresponding to a multiplication factor of approximately 6.0. The maximum crack width is reduced from 0.60 millimeters to 0.20 millimeters, corresponding to a reduction of 67 percent. The post-cracking behavior exhibits increased ductility compared to metallic connectors, combined with excellent corrosion resistance.

The technical analysis of this example demonstrates that aluminum connectors offer an excellent compromise between mechanical strength and corrosion resistance, fiber-reinforced plastic connectors exhibit particularly favorable behavior in terms of ductility and durability, both connector types enable effective interlayer bonding in phased curing conditions without delamination, and the overall performance remains clearly superior to elements without connectors, thereby confirming the inventive effect.

In conclusion, the examples demonstrate that the invention is not limited to connectors made of iron or steel and may utilize aluminum, zinc, or reinforced plastic materials without loss of the central technical effect, thereby expanding the industrial and environmental applicability of the solution.

A comparative synthesis of the examples demonstrates that all examples exhibit substantial performance gains compared to elements without connectors, that increasing connector diameter and connector index ICI leads to increased interfacial strength, fracture toughness, and crack control, that the multilayer structure comprising a low-permeability external layer CI ensures environmental protection and durability, that limiting the industrial effluent to not more than 20 percent of the water content ensures compatibility with hydration and mechanical performance, and that the possibility of applying the external layer CI in two curing stages increases industrial flexibility without compromising interlayer bonding.

Fig. 1, shows a schematic representation of an embodiment of the present disclosure. The construction material is dried (naturally or forced) during the curing phase and the constituents are fixed with at least one binder, from cement, or cement and ashes, or cement and ashes and slag, or ashes, or ashes and slag, or slag, among other possible residues and/or at least one aggregate with different composition types, to ensure cohesion and strength and the security of the final material.

In an embodiment, additionally, aggregates such as sand, stone dust or other materials can be added to fill the voids and control the permeability of the mixture. In some variations of the manufacturing method, additives such as lime can be included to improve the adherence and stability of the material. The mixture is homogenized until a homogeneous paste is obtained.

In an embodiment, the resultant homogeneous mixture is then poured into specific moulds for the production of blocks, paving or other construction materials. The moulds can be adapted to produce materials of different shapes and sizes, meeting the needs of the construction industry. After moulding, the elements are cured under controlled conditions, where they are kept at an ideal temperature and humidity to ensure they achieve the desired mechanical properties and durability.

Figure 2 depicts a flowchart of the method of manufacturing the construction material of the present disclosure, including blocks, pavements, and/or other pigmented construction materials with one or two layers. The process begins with the collection and characterization of the textile industry effluents (1), which contain resin, amides, and other binding agents that enhance water resistance, cohesion, and strength. These effluents also include pigments and other constituents that replace the conventional use of water utilizing effluents and/or wastewater, contributing to resource reuse. Before the mixture of the effluent and/or wastewater with the binder and aggregate, the effluent and/or wastewater is characterized and classified by analytical instruments and technologies to assess the presence of heavy metals at levels exceeding safety thresholds. When heavy metals levels are high, the effluents and/or wastewater are classified and directed for the production of the inner layer (CE)to ensure that contaminants are fixed within the inner layer (CE), preventing contact with the external environment. The non-contaminated effluent and/or wastewater is directed for a one-step method of manufacturing (only one layer). Two layers involve a two-step method of manufacturing. In one example of the two-step method of manufacturing, the external layer is firstly produced, except one face of the external layer that is left unfinished to allow the next step that consisting in the use of an internal steel formwork to allow the production of the inner layer (CE) and the connection of the external layer with the inner layer. After the production of the inner layer (CE), the unfinished face of the external layer is closed (without contaminants). In another example of the two-step method of manufacturing, first the inner layer (CE) is produced with or without steel formwork and subsequently the external layer is produced. Many configurations are possible for the formation of two layers with different cohesion and strengths specifications.

In an embodiment, at least one binder (2), such as cement and/or ashes and/or slag, is added, optionally with additives like lime, to ensure structural integrity with a control contaminants process. Additionally, at least one aggregate (3)(such as sand or alternative materials like stone powder, constructions and demolition wastes) is incorporated to fill voids and control permeability.

In an embodiment, prepared materials are combined in specific proportions and blended to produce a homogeneous paste. This mixture is poured into moulds designed for the production of sidewalks, blocks and/or other construction materials. The moulded elements are then cured under controlled conditions to improve their durability and mechanical properties. In areas exposed to adverse environmental conditions, a protective layer can be applied to increase resistance to moisture, abrasion and potential contaminants.

Figure 3 illustrates two possible embodiments of the manufactured construction materials derived from textile effluents and wastewater and ashes and slag biomass and others similar wastes process (1), including street pavements (i) made from pavers, and walls/roofs/-ceilings (ii) made from blocks.

The present disclosure has several advantages, the manufactured construction material is environmentally friendly, since it is formed by textile effluents and wastewater that would otherwise be discarded or incorrectly treated, but is also durable, resistance to weathering and wear. In addition, the pigments present in textile effluents give the construction material an aesthetic coloration, making them suitable for use in various urban and infrastructure applications.

The present disclosure is particularly useful for the production of durable and aesthetic blocks and paving for streets, sidewalks and squares; and architectural elements with personalized colouring. Among its main benefits are the reuse of textile effluents and wastewater and others waste such us, biomass ashes and slag; a sustainable process that uses recycled effluents and wastewater instead of water; cost reduction; and an aesthetic sense, since the inclusion of textile pigments in the construction elements allows the colour to be customized to meet the needs of specific architectural projects.

The present disclosure presents an effective and innovative method for manufacturing the construction material made from the reuse of textile effluents and wastewaters, enhancing environmental performance and ensuring the safe utilization of waste. In addition to meeting environmental and sustainability requirements, the solution offers aesthetic and economic advantages for the construction industry, with the production of durable, functional and visually attractive materials.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

**Claims**

1. Construction material, comprising at least one cementitious layer, wherein said at least one layer comprises, relative to the total dry mass of the layer:

   5-20 % (w/w) of a total liquid fraction;
   10-30 % (w/w) of at least one binder; and/or
   50-80 % (w/w) of at least one aggregate; and optionally oxide composition;

wherein the total liquid fraction comprises water and/or a textile effluent with a pH ranging from 5.5 to 9.5; and the at least one binder is combined with a solid residue.

2. Construction material according to the previous claim, comprising a first layer and a second layer, wherein the first layer is an inner main layer, and the second layer is an external protective layer comprising less than 10% (w/w) of the total liquid fraction, relative to the dry mass of said external layer.

3. Construction material according to the previous claim, wherein the hydraulic permeability of the inner main layer ranges from $10^{-10}$ to $10^{-12}$ m/s and wherein the hydraulic permeability of the external protective layer ranges from $10^{-12}$ to $10^{-14}$ m/s; and/or the effective diffusivity of the inner main layer ranges from $10^{-12}$ to $10^{-11}$ m$^2$/s and the effective diffusivity of the external protective layer ranges from $10^{-11}$ to $10^{-12}$ m$^2$/s.

4. Construction material according to any of the previous claims 2-3, wherein the thickness of the inner layer ranges from 20 to 120 mm; preferably 20 to 80 mm and wherein the thickness of the external protective layer ranges from 15 to 25 mm.

5. Construction material according to any of the previous claims 2-4, wherein the first layer and the second layer are structurally bonded and form a single construction material.

6. Construction material according to any of the previous claims, wherein the oxide composition of the inner layer (CE) comprises calcium oxide (CaO) in an amount of 40 to 65%(w/w), silicon dioxide (SiO$_2$) in an amount of 15 to 30%(w/w), aluminium oxide (Al$_2$O$_3$) in an amount of 3 to 15%(w/w), iron oxide (Fe$_2$O$_3$) in an amount of 1 to 10%(w/w), magnesium oxide (MgO) in an amount of 0.5 to 5%(w/w), and sulphur trioxide (SO$_3$) in an amount of 0.5 to 4%(w/w) of the total oxide composition.

7. Construction material according to any of the previous claims, wherein the oxide composition of the external layer (CI) comprises calcium oxide (CaO) in an amount of 45 to 70%(w/w), silicon dioxide (SiO$_2$) in an amount of 12 to 28%(w/w), aluminium oxide (Al$_2$O$_3$) in an amount of 2 to 10%(w/w), iron oxide (Fe$_2$O$_3$) in an amount of 0.5 to 6%(w/w), and titanium dioxide (TiO$_2$) in an amount of 0 to 5%(w/w) of the total oxide composition.

8. Construction material according to any of the previous claims, wherein the inner layer comprises the total liquid fraction (1), the binder (2) combined with a contaminated residue, and the aggregate (3); preferably the contaminated residue is encapsulated/immobilized in the inner layer.

9. Construction material according to any of the previous claims, wherein the at least one aggregate is selected from a list consisting of sand, stone powder, or construction and demolition waste, and combinations thereof.

10. Construction material according to any of the previous claims, wherein the aggregates have a particle size ranging from 2 to 8mm; preferably 2 to 4 mm.

11. Construction material according to any the previous claims, wherein the solid residue is selected from a list consisting of: ashes, slags, pozzolanic materials, or combinations thereof; and/or the residue is present in an amount of less than 35 % (w/w) in relation to the weight of binder plus residue; preferably 5 to 35% (w/w) of residue in relation to the weight of binder plus residue.

12. Construction material according to any of the previous claims, wherein the construction material is selected from a list consisting of a paver, a pillar, a beam, and combinations thereof.

13. Construction material according to any of the previous claims, wherein the at least one binder is cement.

14. Construction material according to any of the previous claims, further comprising an additive, a pigment, or connectors; preferably connectors are rods or pins selected from a list consisting of: iron, steel aluminium, zinc, reinforced plastic, or plastic, or combinations thereof and/or preferably additive is lime.

15. Construction material according to any of the previous claims, wherein the compressive strength values range from 25 to 80 MPa; preferably 30 to 80 MPa; more preferably 60 to 80 MPa and/or the apparent density of the construction material ranges from 1,400 to 2,500 kg/m$^3$; preferably 1,700 to 2,000 kg/m$^3$.

16. Method for producing a construction material according to any of claims 1 to 15, comprising the steps of:

    providing a textile industrial effluent comprising water and dissolved and/or suspended constituents, the effluent having a pH in the range of 5.5 to 9.5;
    optionally characterising and, if necessary, conditioning the textile effluent to ensure functional compatibility with a cementitious formulation;

providing a cementitious composition comprising at least one hydraulic binder, at least one mineral aggregate, and optionally a solid residue;

incorporating the textile effluent as a partial or total substitute for water into the cementitious composition, such that the mass ratio between textile effluent and total liquid fraction does not exceed 0.20;

forming at least one cementitious layer from the resulting mixture, and optionally forming a multilayer structure comprising an inner layer and an external protective layer;

curing the formed material to obtain a solid construction material, wherein constituents originating from the textile effluent are chemically stabilised and physically immobilised within the hardened cementitious matrix.

**Fig. 1A**

**Fig. 1B**

Fig. 2

**Fig. 3A**

**Fig. 3B**

## EUROPEAN SEARCH REPORT

Europäisches
Patentamt
European
Patent Office
Office européen
des brevets

**Application Number**

EP 25 22 7882

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARANDE, A.K. ET AL: "Environmental effects on concrete using Ordinary and Pozzolana Portland cement", CONSTRUCTION & BUILDING MATERIALS ELSEVIER LTD, AMSTERDAM, NL, vol. 25, no. 1, 1 January 2011 (2011-01-01), pages 288-297, XP027369270, ISSN: 0950-0618, DOI: 10.1016/J.CONBUILDMAT.2010.06.027 [retrieved on 2010-07-03] * chapters 2.1; samples 4 and 6; figures 1-6; tables 2,3 * * chapters 1.1 - 4; tables 1, 4-9 * | 1-16 | INV. C04B28/02 B32B13/04 |
| X | PATEL HEMA ET AL: "Evaluation of physical stability and leachability of Portland Pozzolona Cement (PPC) solidified chemical sludge generated from textile wastewater treatment plants", JOURNAL OF HAZARDOUS MATERIALS, vol. 207, 2 June 2011 (2011-06-02), pages 56-64, XP028898381, ISSN: 0304-3894, DOI: 10.1016/J.JHAZMAT.2011.05.028 * chapters 2.1.2 and 2.2 * * chapters 2.1, 2.1.1,2.2 - 4; figures 1-8; tables 1-5 * | 1,3, 11-13,15 | |

| | |
|---|---|
| | TECHNICAL FIELDS SEARCHED (IPC) |
| | C04B |

-/--

The present search report has been drawn up for all claims

| Place of search | Date of completion of the search | Examiner |
|---|---|---|
| The Hague | 29 May 2026 | Büscher, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 22 7882

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GOYAL SHWETA ET AL: "Reutilization of textile sludge stabilized with low grade-MgO as a replacement of cement in mortars", CONSTRUCTION & BUILDING MATERIALS ELSEVIER LTD, AMSTERDAM, NL, vol. 338, 30 April 2022 (2022-04-30), XP087056073, ISSN: 0950-0618, DOI: 10.1016/J.CONBUILDMAT.2022.127643 [retrieved on 2022-04-30] * the whole document * | 1-16 | |
| A | CN 111 377 681 A (ZHEJIANG XIANGWANG BUILDING ENERGY SAVING TECH CO LTD) 7 July 2020 (2020-07-07) * the whole document * | 1-16 | |
| A | CN 112 408 921 A (WENZHOU DINGMA CONSTRUCTION TECH CO LTD) 26 February 2021 (2021-02-26) * the whole document * | 1-16 | **TECHNICAL FIELDS SEARCHED (IPC)** |

The present search report has been drawn up for all claims

| Place of search | Date of completion of the search | Examiner |
|---|---|---|
| The Hague | 29 May 2026 | Büscher, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 772 487 A1**

## ANNEX TO THE EUROPEAN SEARCH REPORT
## ON EUROPEAN PATENT APPLICATION NO.

EP 25 22 7882

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2026

| Patent document cited in search report | Publication date | Patent family member(s) | Publication date |
|---|---|---|---|
| CN 111377681 A | 07-07-2020 | NONE | |
| CN 112408921 A | 26-02-2021 | NONE | |

EPO FORM P0459

For more details about this annex : see Official Journal of the European Patent Office, No. 12/82